# EUROPEAN PATENT SPECIFICATION

(11) **EP 2 019 223 B1**
(45) Date of publication and mention of the grant of the patent: **02.03.2011**
(21) Application number: 07425466.5
(22) Date of filing: 25.07.2007
(51) Int. Cl.: F16D 13/02

(54) **Transmission with helical springs**
Transmission mit Schraubenfedern
Transmission avec des ressorts hélicoïdaux

(43) Date of publication of application: 28.01.2009
(73) Proprietor: Bi.Ci.Di. s.r.l, 20078 S. Colombano al Lambro MI (IT)
(72) Inventor: Feligioni Luigi, 20131 Milano (IT)
(74) Representative: Pizzoli, Antonio

(56) References cited:
- EP-A- 1 571 358
- FR-A- 2 018 780
- GB-A- 1 521 078
- US-A- 3 835 976
- US-A- 4 440 280

## Description

The present invention relates to a transmission with helical springs, and in particular to a transmission which can be employed in the gearboxes of the engine-driven cultivators. The present invention also relates to a gearbox for engine-driven cultivators and an engine-driven cultivator which comprise said transmission.

Known engine-driven cultivators comprise a gearbox provided with a clutch which is temporarily disengaged for passing from a neutral position to a forward or reverse gear, and vice versa. Since said clutch is kept normally engaged by elastic means, the user may be injured if he does not turn the engine off when he does not control the engine-driven cultivator.

For solving this safety problem, the clutch could be normally disengaged, so that the user must keep it continuously engaged during the use, which however requires a prolonged effort of the user for overcoming the elastic means opposing the engagement of the clutch. Since the gearbox must transmit the torque of an internal combustion engine, said effort is quite remarkable.

European patent 1571358 discloses a transmission comprising a main shaft keyed to two first sleeves, as well as a pair of helical springs which are keyed in two collars, so that a relative rotation of the collars with respect to the main shaft causes the tightening of at least one helical spring around the first sleeves and second sleeves arranged in a coaxial and rotatable manner around the main shaft.

US patent 4825988 discloses another transmission comprising a main shaft keyed to two first sleeves, as well as a pair of helical springs which are connected to electromagnetic clutches, so that the operation of an electromagnetic clutch causes the tightening of at least one helical spring around the first sleeves and to second sleeves arranged in a coaxial and rotatable manner around the first sleeves. US 3835976 discloses a typewriter device comprising two helical springs which are arranged in collars for being alternatively tightened on one of two sleeves rotating in opposite directions, so as to rotate an output shaft in either direction. US 444112811 discloses a spring clutch mechanism comprising one helical spring which can be tightened astride two adjacent sleeves and is arranged in a collar suitable for being coupled frictionally with a wheel integral with one of these sleeves.

Said known transmissions cannot be used in a gearbox for engine-driven cultivators, since they serve to transmit the motion from a shaft to another one or to two main shafts aligned to each other for rotating in the same direction, so that they cannot be modified or adapted in a practical and simple manner for obtaining a gearbox with forward gear and reverse gear.

It is therefore an obj ect of the present invention to provide a transmission which is free from said disadvantages. Said object is achieved with a transmission and a gearbox, whose main features are disclosed in claims 1 and 17, respectively, while other features are disclosed in the remaining claims.

Thanks to the combined use of helical springs and mechanical friction coupling, the transmission according to the present invention requires a negligible effort from the user for keeping the main shaft coupled with the secondary shaft, both in the forward gear and the reverse gear. As a matter of fact, the force applied to an end of a spring for tightening it around the sleeves is remarkably lower than the tightening pressure exerted by the spring around the sleeves, so that the user's effort for keeping the friction coupling is much lower with respect to the known clutches, obviously when the transmitted torque is the same.

According to a particular aspect of the invention, the collars containing the helical springs are arranged between a pair of cogwheels which transmit to the collars the motion of the secondary shaft in the same direction and in the opposite direction, respectively, so as to obtain a bidirectional and relatively compact transmission.

According to another particular aspect of the invention, both collars can be axially shifted by a control member arranged between the collars and driven by a control rod parallel to the secondary shaft, so as to further decrease the size and the components of the transmission.

The use of the transmission according to the present invention in gearboxes for engine-driven cultivators makes thus particularly safe and easy to use the engine-driven cultivators provided with these gearboxes.

Further advantages and features of the transmission according to the present invention will become clear to those skilled in the art from the following detailed and non-limiting description of an embodiment thereof with reference to the attached drawings, wherein:
- figure 1 shows a sectioned view of the transmission in a first operating position;
- figure 2 shows a sectioned view of the transmission of figure 1 in a second operating position; and
- figure 3 shows a sectioned view of the transmission of figure 1 in a third operating position.

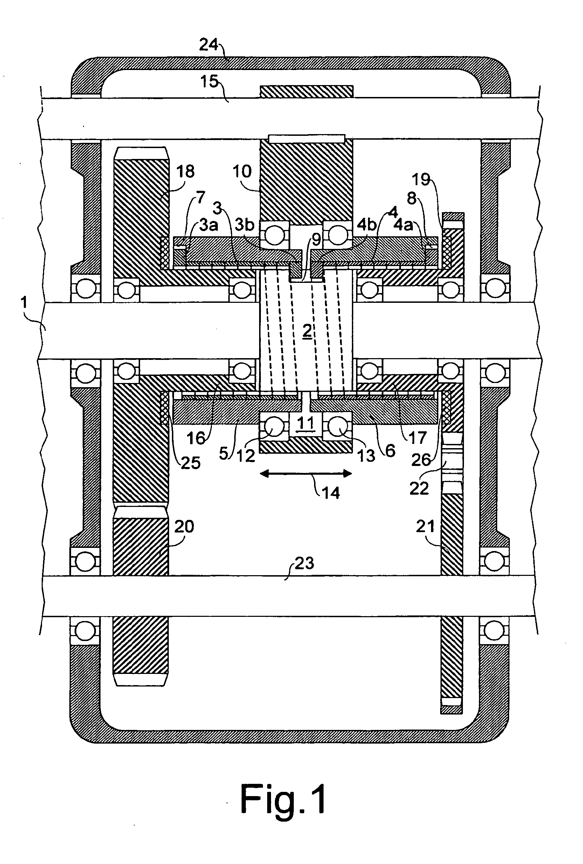

Referring to figure 1, it is seen that the transmission according to the present invention comprises a main shaft 1, in particular a driven shaft of a gearbox for engine-driven cultivators, which is integral, in particular joined or keyed, with at least one first sleeve 2. The latter can also be made in a single piece with the main shaft 1, for example by means of turning. In another embodiment main shaft 1 may comprise two first sleeves. A pair of helical springs 3, 4 having a rectangular or square section wire and the same coiling direction are arranged inside a first or second collar 5, 6, respectively, and are keyed to these collars. In particular, an end 3a, 4a of a helical spring 3, 4 is bent outwards and is inserted in a key-way 7, 8 made in the cylindrical inner surface of a collar 5, 6. The other end 3b, 4b of helical spring 3, 4 is instead bent inwards and is inserted in a key-way 9 made in the cylindrical outer surface of first sleeve 2. In an alternative embodiment, the ends of a single helical spring are keyed to first collar 5 and to second collar 6, while a central portion thereof is keyed to first sleeve 2, so that this spring can be tightened around first sleeve 2 and, in an independent manner, around first collar 5 or second collar 6.

At least one control member 10 is mechanically connected to collars 5, 6 for shifting them axially. In particular, control member 10 is arranged between collars 5, 6 and comprises a cursor provided with a circular hole 11 in which one or more bearings 12, 13 are arranged, which bearings are in turn arranged in seats made in the outer surface of collars 5, 6, so that the latter can be shifted axially in the direction of arrow 14 by a corresponding motion of control member 10, imparted in turn by a control rod 15 which is substantially parallel to main shaft 1.

A first portion of helical springs 3, 4 surrounds first sleeve 2, while a second portion of helical springs 3, 4 surrounds second sleeves 16, 17 arranged in a coaxial and rotatable manner around main shaft 1 by means of a plurality of bearings. The outer diameter of second sleeves 16, 17 is substantially equal to the outer diameter of first sleeve 2. First cogwheels 18, 19 are coaxially integral, in particular keyed or joined, with second sleeves 16, 17, so that collars 5, 6 are arranged between first cogwheels 18, 19. In the present embodiment second sleeves 16, 17 are made of a single piece with first cogwheels 18, 19. The latter are mechanically connected to second cogwheels 20, 21 for rotating in opposite directions or in the same direction, respectively, of the latter. In particular a first cogwheel 18 is in mesh with a second cogwheel 20 having a smaller diameter for rotating in opposite directions, while another first cogwheel 19 is connected to another second cogwheel 21 having substantially the same diameter by means of a toothed belt or chain 22 for rotating in the same direction. Second cogwheels 20, 21 are keyed in turn to a secondary shaft 23, in particular a drive shaft of a gearbox for engine-driven cultivators, substantially parallel to main shaft 1, so that by rotating secondary shaft 23, second sleeves 16, 17 rotate in opposite directions. All the above mentioned components are arranged in a container 24, from which only main shaft 1, secondary shaft 23 and control rod 15 come out.

One or more friction rings 25, 26 are fixed to first cogwheels 18, 19 and/or to collars 5, 6 for allowing a mutual frictional coupling between a first cogwheel 18 or 19 and a collar 5 or 6 urged toward said cogwheel. In the present embodiment, a friction ring 25, 26 is fixed to the inner lateral wall of either cogwheel 18, 19 beside a collar 5, 6.

Figure 1 shows a first operating position of the transmission, corresponding to the neutral position of a gearbox, wherein no collar 5 or 6 is coupled with a cogwheel 18, 19, so that the rotation of secondary shaft 23 does not cause the rotation of main shaft 1, and vice versa. If secondary shaft 23 rotates, only second cogwheels 20, 21, first cogwheels 18, 19 and second sleeves 16, 17 rotate.

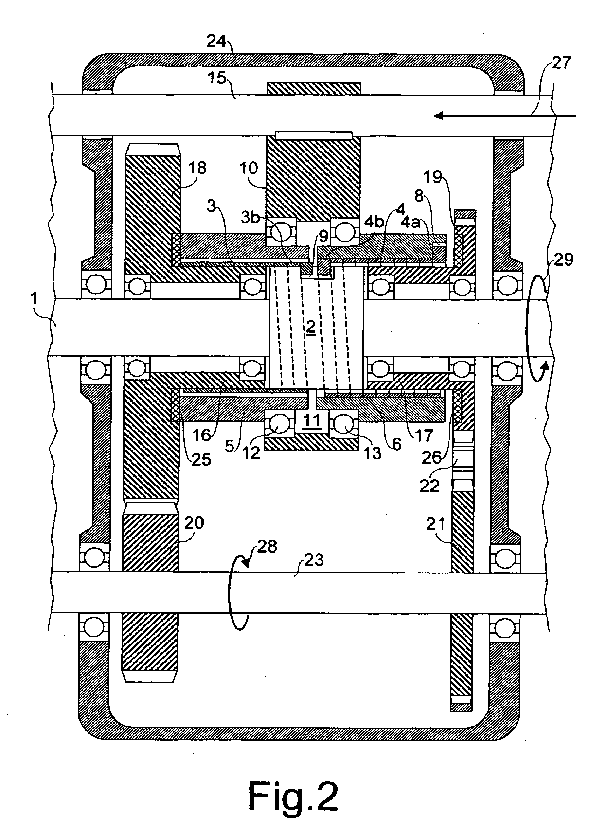

Referring to figure 2, it is seen that in a second operating position of the transmission, corresponding to the reverse gear position of a gearbox, control rod 15 is pushed by a user in the direction of arrow 27, so that control member 10 urges collar 5 toward first cogwheel 18, which couples with collar 5. If secondary shaft 23 rotates in the direction of arrow 28, collar 5 rotates in the opposite direction thanks to cogwheels 18 and 20, thereby causing a relative rotation between collar 5 and first sleeve 2, namely between ends 3a, 3b of helical spring 3. This relative rotation causes in turn the traction of helical spring 3, which is tightened around first sleeve 2 and second sleeve 16, so that also main shaft 1 rotates together with cogwheel 18 and collar 5 in the direction of arrow 29. When collar 5 is removed from first cogwheel 18, helical spring 3 expands elastically, so that first sleeve 2 is disengaged from second sleeve 16.

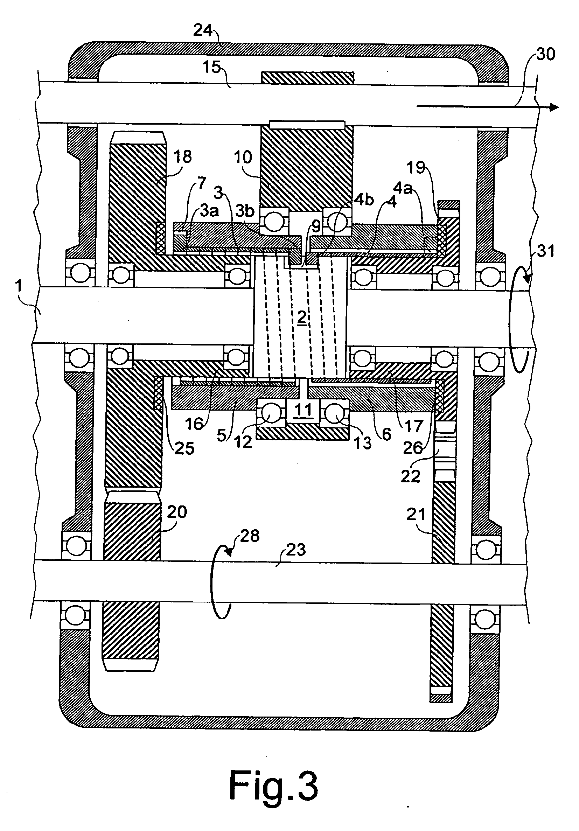

Referring to figure 3, it is seen that in a third operating position of the transmission, corresponding to the forward gear position of a gearbox, control rod 15 is pushed by a user in the direction of arrow 30, so that control member 10 urges collar 6 toward first cogwheel 19, which couples with collar 6. If secondary shaft 23 still rotates in the direction of arrow 28, collar 6 rotates in the same direction thanks to cogwheels 19 and 21, thereby causing a relative rotation between collar 6 and first sleeve 2, namely between ends 4a, 4b of helical spring 4. This relative rotation causes in turn the traction of helical spring 4, which is tightened around first sleeve 2 and second sleeve 17, so that also main shaft 1 rotates together with cogwheel 19 and collar 6 in the direction of arrow 31. When collar 6 is removed from first cogwheel 19, helical spring 4 expands elastically, so that first sleeve 2 is disengaged from second sleeve 17.

Possible modifications and/or additions may be made by those skilled in the art to the hereinabove disclosed and illustrated embodiment while remaining within the scope of the following claims.

## Claims

1. Transmission comprising a main shaft (1) integral with at least one first sleeve (2), as well as one or more helical springs (3, 4) which are arranged inside a first collar (5) and/or a second collar (6), respectively, and are keyed to these collars (5, 6), so that a relative rotation of at least one collar (5, 6) with respect to the main shaft (1) causes the tightening of at least one helical spring (3, 4) around the first sleeve (2) and one of at least two second sleeves (16, 17) arranged in a coaxial and rotatable manner around the main shaft (1), **characterized in that** at least one control member (10) is mechanically connected to the collars (5, 6) for shifting them axially and coupling them frictionally with first wheels (18, 19) which are coaxially integral with the second sleeves (16, 17).

2. Transmission according to the previous claim, **characterized in that** the helical springs (3, 4) are at least two and have the same coiling direction.

3. Transmission according to one of the previous claims, **characterized in that** the control member (10) is arranged between the collars (5, 6).

4. Transmission according to one of the previous claims, **characterized in that** the collars (5, 6) are arranged between said first wheels (18, 19).

5. Transmission according to one of the previous claims, **characterized in that** at least one end (3a, 4a) of a helical spring (3, 4) is bent outwards and is inserted in a key-way (7, 8) made in the cylindrical inner surface of a collar (5, 6).

6. Transmission according to one of the previous claims, **characterized in that** at least one helical spring (3, 4) is keyed to the first sleeve (2).

7. Transmission according to the previous claim, **characterized in that** at least one end (3b, 4b) of a helical spring (3, 4) is bent inwards and is inserted in a key-way (9) made in the cylindrical outer surface of the first sleeve (2).

8. Transmission according to one of the previous claims, **characterized in that** the control member (10) comprises a cursor provided with a circular hole (11) in which one or more bearings (12, 13) are arranged, which bearings are in turn arranged in seats made in the outer surface of the collars (5, 6).

9. Transmission according to one of the previous claims, **characterized in that** the control member (10) is mechanically connected to a control rod (15) which is substantially parallel to the main shaft (1).

10. Transmission according to one of the previous claims, **characterized in that** the outer diameter of the second sleeves (16, 17) is substantially equal to the outer diameter of the first sleeve (2).

11. Transmission according to one of the previous claims, **characterized in that** said first wheels (18, 19) are mechanically connected for rotating in opposite directions.

12. Transmission according to the previous claim, **characterized in that** said first wheels (18, 19) are mechanically connected to a secondary shaft (23) substantially parallel to the main shaft (1).

13. Transmission according to one of the previous claims, **characterized in that** said first wheels (18, 19) are cogwheels mechanically connected to second cogwheels (20, 21) for rotating in opposite directions or in the same direction of the latter.

14. Transmission according to the previous claim, **characterized in that** a first cogwheel (18) is in mesh with a second cogwheel (20) having a smaller diameter.

15. Transmission according to claim 13 or 14, **characterized in that** a first cogwheel (19) is connected to a second cogwheel (21) having substantially the same diameter by means of a toothed belt or chain (22).

16. Transmission according to one of the previous claims, **characterized in that** one or more friction rings (25, 26) are fixed to the first cogwheels (18, 19) and/or to the collars (5, 6).

17. Gearbox for engine-driven cultivators, **characterized in that** it comprises a transmission according to one of the previous claims.

18. Gearbox according to the previous claim, **characterized in that** the secondary shaft (23) is a drive shaft and the main shaft (1) is a driven shaft.

19. Engine-driven cultivator, **characterized in that** it comprises a gearbox according to claim 17 or 18.

## Patentansprüche

1. Übersetzung, umfassend eine Hauptwelle (1), die mit zumindest einer Buchse (2) einstückig ist, sowie eine oder mehr Schraubenfedern (3, 4), die jeweils innerhalb einer ersten Einfassung (5) und/oder einer zweiten Einfassung (6) angeordnet sind und derart mit diesen Einfassungen (5, 6) verkeilt sind, dass eine relative Drehung von zumindest einer Einfassung (5, 6) bezüglich der Hauptwelle (1) das Anziehen von zumindest einer Schraubenfeder (3, 4) um die erste Buchse (2) und eine von zumindest zwei zweiten Buchsen (16, 17) bewirkt, die koaxial und drehbar um die Hauptwelle (1) angeordnet sind, **dadurch gekennzeichnet, dass** zumindest ein Steuerglied (10) mechanisch mit den Einfassungen (5, 6) verbunden ist, um sie axial zu versetzen und reibend mit ersten Rädern (18, 19) zu koppeln, die koaxial einstückig mit den zweiten Buchsen (16, 17) sind.

2. Übersetzung nach dem vorhergehenden Anspruch, **dadurch gekennzeichnet, dass** die Schraubenfedern (3, 4) zumindest zwei sind und dieselbe Wicklungsrichtung aufweisen.

3. Übersetzung nach einem der vorhergehenden Ansprüche, **dadurch gekennzeichnet, dass** das Steuerglied (10) zwischen den Einfassungen (5, 6) angeordnet ist.

4. Übersetzung nach einem der vorhergehenden Ansprüche, **dadurch gekennzeichnet, dass** die Einfassungen (5, 6) zwischen den ersten Rädern (18, 19) angeordnet sind.

5. Übersetzung nach einem der vorhergehenden Ansprüche, **dadurch gekennzeichnet, dass** zumindest ein Ende (3a, 4a) einer Schraubenfeder (3, 4) nach außen gebogen ist und in eine Keilnut (7, 8) eingefügt ist, die in der zylindrischen Innenfläche einer Einfassung (5, 6) hergestellt ist.

6. Übersetzung nach einem der vorhergehenden Ansprüche, **dadurch gekennzeichnet, dass** zumindest eine der Schraubenfedern (3, 4) mit der ersten Einfassung (2) verkeilt ist.

7. Übersetzung nach dem vorhergehenden Anspruch, **dadurch gekennzeichnet, dass** zumindest ein Ende (3b, 4b) einer Schraubenfeder (3, 4) nach innen gebogen ist und in eine Keilnut (9) eingefügt ist, die in der zylindrischen Außenfläche der ersten Einfassung (2) hergestellt ist.

8. Übersetzung nach einem der vorhergehenden Ansprüche, **dadurch gekennzeichnet, dass** das Steuerglied (10) einen Läufer umfasst, der mit einem umlaufenden Loch (11) versehen ist, in dem ein oder mehr Lager (12, 13) angeordnet sind, welche wiederum in Sitzen angeordnet sind, die in der Außenfläche der Einfassungen (5, 6) hergestellt sind.

9. Übersetzung nach einem der vorhergehenden Ansprüche, **dadurch gekennzeichnet, dass** das Steuerglied (10) mechanisch mit einer Steuerstange (15) verbunden ist, die im Wesentlichen parallel zu der Hauptwelle (1) ist.

10. Übersetzung nach einem der vorhergehenden Ansprüche, **dadurch gekennzeichnet, dass** der Außendurchmesser der zweiten Einfassungen (16, 17) im Wesentlichen gleich dem Außendurchmesser der ersten Einfassung (2) ist.

11. Übersetzung nach einem der vorhergehenden Ansprüche, **dadurch gekennzeichnet, dass** die ersten Räder (18, 19) zum Drehen in entgegengesetzte Richtungen mechanisch verbunden sind.

12. Übersetzung nach dem vorhergehenden Anspruch, **dadurch gekennzeichnet, dass** die ersten Räder (18, 19) mechanisch mit einer Nebenwelle (23), die im Wesentlichen parallel zu der Hauptwelle (1) ist, verbunden sind.

13. Übersetzung nach einem der vorhergehenden Ansprüche, **dadurch gekennzeichnet, dass** die ersten Räder (18, 19) Zahnräder sind, die mechanisch mit zweiten Zahnrädern (20, 21) zum Drehen in entgegengesetzte Richtungen oder der gleichen Richtung der Letzteren verbunden sind.

14. Übersetzung nach einem der vorhergehenden Ansprüche, **dadurch gekennzeichnet, dass** ein erstes Zahnrad (18) mit einem zweiten Zahnrad (20) in Eingriff steht, das einen kleineren Durchmesser aufweist.

15. Übersetzung nach einem der Ansprüche 13 oder 14, **dadurch gekennzeichnet, dass** ein erstes Zahnrad (19) mithilfe eines Zahnriemens oder einer Kette (22) mit einem zweiten Zahnrad (21), das im Wesentlichen denselben Durchmesser aufweist, verbunden ist.

16. Übersetzung nach einem der vorhergehenden Ansprüche, **dadurch gekennzeichnet, dass** ein oder mehr Reibringe (25, 26) an den ersten Zahnrädern (18, 19) und/oder den Einfassungen (5, 6) befestigt sind.

17. Getriebe für motorgetriebene Kultivatoren, **dadurch gekennzeichnet, dass** er eine Übersetzung nach einem der vorhergehenden Ansprüche umfasst.

18. Getriebe nach dem vorhergehenden Anspruch, **dadurch gekennzeichnet, dass** die Nebenwelle (23) eine Antriebswelle und die Hauptwelle (1) eine Abtriebswelle ist.

19. Motorgetriebener Kultivator, **dadurch gekennzeichnet, dass** er ein Getriebe nach einem der Ansprüche 17 oder 18 umfasst.

## Revendications

1. Transmission comprenant un arbre principal (1) solidaire avec au moins un premier manchon (2), ainsi qu'un ou plusieurs ressorts hélicoïdaux (3, 4) qui sont agencés à l'intérieur d'un premier collier (5) et/ou d'un deuxième collier (6) respectivement et sont clavetés sur ces colliers (5, 6) de sorte qu'une rotation relative d'au moins un collier (5, 6) par rapport à l'arbre principal (1) provoque le serrage d'au moins un ressort hélicoïdal (3, 4) autour du premier manchon (2) et l'un d'au moins deux deuxièmes manchons (16, 17) agencés d'une manière coaxiale et rotative autour de l'arbre principal (1), **caractérisée en ce qu'**au moins un élément de commande (10) est mécaniquement raccordé aux colliers (5, 6) pour les décaler axialement et les coupler par friction avec les premières roues (18, 19) qui sont solidaires de manière coaxiale avec les deuxièmes manchons (16, 17).

2. Transmission selon la revendication précédente, **caractérisée en ce que** les ressorts hélicoïdaux (3, 4) sont au moins deux et ont la même direction d'enroulement.

3. Transmission selon l'une quelconque des revendications précédentes, **caractérisée en ce que** l'élément de commande (10) est agencé entre les colliers (5, 6).

4. Transmission selon l'une quelconque des revendications précédentes, **caractérisée en ce que** les colliers (5, 6) sont agencés entre lesdites premières roues (18, 19).

5. Transmission selon l'une quelconque des revendications précédentes, **caractérisée en ce qu'**au moins une extrémité (3a, 4a) d'un ressort hélicoïdal (3, 4) est courbée vers l'extérieur et est insérée dans une rainure de clavette (7, 8) réalisée dans la surface interne cylindrique d'un collier (5, 6).

6. Transmission selon l'une quelconque des revendications précédentes, **caractérisée en ce qu'**au moins un ressort hélicoïdal (3, 4) est claveté sur le premier manchon (2).

7. Transmission selon la revendication précédente, **caractérisée en ce qu'**au moins une extrémité (3b, 4b) d'un ressort hélicoïdal (3, 4) est courbée vers l'intérieur et est insérée dans une rainure de clavette (9) réalisée dans la surface externe cylindrique du premier manchon (2).

8. Transmission selon l'une quelconque des revendications précédentes, **caractérisée en ce que** l'élément de commande (10) comprend un curseur prévu avec un trou circulaire (11) dans lequel un ou plusieurs paliers (12, 13) sont agencés, lesquels paliers sont à leur tour agencés dans des sièges réalisés dans la surface externe des colliers (5, 6).

9. Transmission selon l'une quelconque des revendications précédentes, **caractérisée en ce que** l'élément de commande (10) est mécaniquement raccordé à une tige de commande (15) qui est sensiblement parallèle à l'arbre principal (1).

10. Transmission selon l'une quelconque des revendications précédentes, **caractérisée en ce que** le diamètre externe des deuxièmes manchons (16, 17) est sensiblement égal au diamètre externe du premier manchon (2).

11. Transmission selon l'une quelconque des revendications précédentes, **caractérisée en ce que** lesdites premières roues (18, 19) sont mécaniquement raccordées pour tourner dans les sens opposés.

12. Transmission selon la revendication précédente, **caractérisée en ce que** lesdites premières roues (18, 19) sont mécaniquement raccordées à un arbre secondaire (23) sensiblement parallèle à l'arbre principal (1).

13. Transmission selon l'une quelconque des revendications précédentes, **caractérisée en ce que** lesdites premières roues (18, 19) sont des roues dentées mécaniquement raccordées à des deuxièmes roues dentées (20, 21) pour tourner dans des sens opposés ou dans le même sens que ces dernières.

14. Transmission selon la revendication précédente, **caractérisée en ce qu'**une première roue dentée (18) est engrenée avec une deuxième roue dentée (20) ayant un plus petit diamètre.

15. Transmission selon la revendication 13 ou 14, **caractérisée en ce qu'**une première roue dentée (19) est raccordée à une deuxième roue dentée (21) ayant sensiblement le même diamètre, au moyen d'une courroie ou chaîne dentée (22).

16. Transmission selon l'une quelconque des revendications précédentes, **caractérisée en ce qu'**une ou plusieurs bagues de friction (25, 26) sont fixées sur les premières roues dentées (18, 19) et/ou sur les colliers (5, 6).

17. Boîte de vitesses pour motoculteur motorisé, **caractérisée en ce qu'**il comprend une transmission selon l'une quelconque des revendications précédentes.

18. Boîte de vitesses selon la revendication précédente, **caractérisée en ce que** l'arbre secondaire (23) est un arbre d'entraînement et l'arbre principal (1) est un arbre entraîné.

19. Motoculteur motorisé **caractérisé en ce qu'**il comprend une boîte de vitesses selon la revendication 17 ou 18.
